# EUROPEAN PATENT SPECIFICATION

(11) **EP 2 725 753 B1**
(45) Date of publication and mention of the grant of the patent: **18.07.2018**
(21) Application number: 12306348.9
(22) Date of filing: 29.10.2012
(51) Int. Cl.: H04W 28/10, H04L 12/807, H04L 12/841, H04L 12/875, H04L 1/18, H04L 1/20, H04W 72/04

(54) **APPARATUS, METHOD AND COMPUTER PROGRAM FOR CONFIGURING A DELAY FOR A SYNCHRONOUS TRANSMISSION CYCLE**
VORRICHTUNG, VERFAHREN UND COMPUTERPROGRAMM ZUR KONFIGURATION EINER VERZÖGERUNG FÜR EINEN SYNCHRONEN ÜBERTRAGUNGSZYKLUS
APPAREIL, PROCÉDÉ ET PROGRAMME INFORMATIQUE POUR CONFIGURER UN RETARD POUR UN CYCLE SYNCHRONE DE TRANSMISSION

(43) Date of publication of application: 30.04.2014
(60) Divisional application: 18173067.2
(73) Proprietor: Alcatel Lucent, 91620 Nozay (FR)
(72) Inventor: Braun, Volker, 70176 Stuttgart (DE); Doetsch, Uwe, 74392 Freudental (DE); Mayer, Hans-Peter, 71254 Ditzingen (DE)
(74) Representative: Menzietti, Domenico

(56) References cited:
- US-A1- 2003 108 027
- US-A1- 2004 002 341
- US-A1- 2010 182 952
- LIN CAI ET AL: "Performance modeling and analysis of window-controlled multimedia flows in wireless/wired networks", IEEE TRANSACTIONS ON WIRELESS COMMUNICATIONS, IEEE SERVICE CENTER, PISCATAWAY, NJ, US, vol. 6, no. 4, 1 April 2007 (2007-04-01), pages 1356-1365, XP011177127, ISSN: 1536-1276, DOI: 10.1109/TWC.2007.05427
- "Discussions on different network configurations in eICIC", 3GPP DRAFT; R2-112282, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 17 August 2011 (2011-08-17), XP050537797, [retrieved on 2011-08-17]
- ALCATEL-LUCENT ET AL: "Modelling of communication constraints between CoMP transmission points", 3GPP DRAFT; R1-110805 COMP BACKHAUL R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Taipei, Taiwan; 20110221, 17 February 2011 (2011-02-17), XP050490760, [retrieved on 2011-02-17]
- 3GPP: "TS36.331 V11.1.0, Evolved Universal Terrestrial Radio Access (E-UTRA); Radio Rssource Control (RRC), Protocol specification (Release 11)", , 26 September 2012 (2012-09-26), pages 279-284, XP002700289, Retrieved from the Internet: URL:http://www.3gpp.org/ftp/Specs/html-inf o/36331.htm [retrieved on 2013-07-05]
- ALCATEL: "RLC, MAC and HARQ context transfer for intra-eNB handover", 3GPP DRAFT; R2-063328_RLC, MAC AND HARQ CONTEXT TRANSFER FOR INTRA-ENB HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Riga, Latvia; 20061101, 1 November 2006 (2006-11-01), XP050132810, [retrieved on 2006-11-01]
- "DISCUSSION ON MACRO DIVERSITY FOR EVOLVED UTRA", 3GPP DRAFT; R3-051080, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Cannes, France; 20051005, 5 October 2005 (2005-10-05), XP050158595, [retrieved on 2005-10-05]

## Description

Embodiments relate to data transmission in communication networks, more particularly but not exclusively to data transmission and acknowledgement in mobile communication networks.

### Background

Conventional mobile communication systems make use of circuit switched and packet switched data. While for circuit switched data transmission radio resources are permanently reserved in a connection oriented manner, packet data transmission makes use of scheduling, i.e. radio resources are assigned non-permanently in a connection less manner. The procedure of assigning radio resources to certain users for packet data transmission is also referred to as scheduling. The entity carrying out scheduling is also called a scheduler. Architectures of mobile communication systems tend to be more and more centralized. In other words, more and more intelligence of the mobile communication network is concentrated in centralized entities and transmission points, where transmission and reception of wireless signals is carried out, become more and more lean. This kind of architecture is, for example, motivated by savings, which can be obtained at the transmission points. Since a large number of transmission points is used for a mobile communication system they may be kept as inexpensive as possible. Moreover, the efficiency of processing resources can be increased, when the processing resources are concentrated at central nodes in the network.

While the processing is concentrated more and more at centralized processing units, the processing moves farther away from the actual transmission point. The interfacing between the centralized processing and the respective transmission point can be established using optical links on fibers. Nevertheless delays are introduced, which may affect delay budgets of the packet data transmissions.

Lin Cai et al disclose in "Performance modeling and analysis of window-controlled multimedia flows in wireless/wired networks", May 2004, IEEE TRANSACTIONS ON WIRELESS COMMUNICATIONS, VOL. 6. NO. 4, April 2007, an analytical framework for modeling and quantifying the performance of window-controlled multimedia flows in a hybrid wireless/wired network. The framework captures the traffic characteristics of window-controlled flows and is applicable to various wireless links and packet transmission schemes. The authors show analytically the relationship between the sender window size, the wireless link throughput distribution, and the delay distribution. The analysis is substantiated by demonstrating how to statistically bound the end-to-end delay of flows controlled by a TCP-like Datagram Congestion Control Protocol (DCCP) over an M-state Markovian wireless link. Simulation results validate the analysis and demonstrate the effectiveness and efficiency of the proposed delay control scheme. The scheme can also be applied to other window-based transport layer protocols.

Document US 2004 002 341 (A1) discloses techniques for scheduling terminals with different scheduling delays. Initially, the scheduling delay of each terminal is determined, and the total available transmit power and the link efficiency of each terminal are estimated. In a first scheme, the terminals are scheduled for data transmission based on the longest scheduling delay among the delays of all terminals. In a second scheme, each terminal is assigned a particular priority based on its scheduling delay, and the terminals are scheduled based on their assigned priorities. In a third scheme, the terminals are categorized into classes based on their scheduling delays. A percentage of the total available transmit power is allocated to each class, and the terminals in each class are scheduled based on the transmit power allocated to that class. In a fourth scheme, the terminals are scheduled for data transmission, and the schedule for each terminal is applied after its scheduling delay.

Document US 2010 182 952 (A1) discloses a Radio Resource Control (RRC) message transmission method and apparatus for a wireless communication system operating in Time Transmission Intervals (TTI) and acknowledge mode is configured to reduce interruption time by minimizing retransmission times of RRC message. The message transmission method for a wireless communication system includes generating, at a transmitter, a message; transmitting the message two or more times consecutively from the transmitter to a receiver; analyzing, at a receiver, the message transmitted by the transmitter; transmitting an acknowledge message or a negative-acknowledge from the receiver to the transmitter depending on the analysis result; and terminating, at the transmitter, a retransmission process of the message upon receipt of the acknowledgement message.

Document US2003 108 027 (A1) describes an apparatus and method for minimizing a non-transmittable period where high-speed packet data transmission is impossible. In the apparatus, a non-transmittable period calculator receives transmission gap-related information for a UE from a radio network controller, calculates a transmission gap starting point based on the transmission gap-related information, defines a period determined by excluding the downlink transmission period from the transmission gap starting point as the non-transmittable period, and suspends transmission of the high-speed packet data to the UE for the non-transmittable period. A scheduler performs scheduling on the high-speed packet data under the control of the non-transmittable period calculator so that transmission of the high-speed packet data to the UE is suspended for the downlink transmission period.

### Summary

It is a finding that in future communication systems centralized processing architecture may be supported, where a centralized BaseBand Unit (BBU) performs baseband processing for a potentially large number of radio cells and their respective users. Optical fiber transmission between a BBU and a Remote Radio Head (RRH)/transmission point, e.g. using Common Public Radio Interface (CPRI) links, causes a round-trip latency of about 10µs/km. The round-trip transmission latency reduces the time available in the Channel Elements (CE) or processing resources of a BBU for the signal processing. This may put a limit on the maximum fiber length, which can be supported, and it may become more critical with shorter sub-frame duration, e.g. 2ms in High Speed Packet Access (HSPA), 1ms in Long Term Evolution (LTE) and possibly <1ms in next generation systems.

In HSPA and LTE, a synchronized Hybrid Automatic Retransmission reQuest (HARQ) protocol is used in UpLink (UL), with a fixed number of 8 HARQ processes and a strict timing. HARQ, in principal, corresponds to a stop and wait protocol. In other words the transmitter stops and waits until it receives a positive or Negative ACKnowledgement (ACK/NACK) from the receiver before transmitting the next data packet, retransmitting a payload data packet or further information on the data packet, respectively. In LTE, for example, one sub-frame (1ms) is used to transmit the data and it takes 4 sub-frames until the acknowledgement is received and 4 more sub-frames before transmitting the next or retransmitting a payload data packet. The seven intermediate sub-frames are used for other HARQ processes. Hence, LTE uses multiple parallel HARQ processes in a time multiplexed manner.

Hence, for an UL new payload packet 4 sub-frames (4ms) are used before receiving the corresponding DownLink (DL) ACK/NACK, and yet another 4 sub-frames (4ms) are used before transmitting in the UL a retransmission/new packet. The use of a HARQ protocol, where ACK/NACK needs to be transmitted to a User Equipment (UE) with strict timing relations, may render the uplink the critical link for centralized base station architectures. The number of such HARQ processes and the respective delay in the architecture may affect the peak data rate of a user as it may introduce transmission gaps. This may also be valid for asynchronous HARQ protocols, where the strict mapping of sub-frames and HARQ processing is loosened up at the price of transmitting additional identifiers to link a certain acknowledgement packet or redundancy version of a retransmission to a payload data packet.

Hence, it is a finding that the farther the scheduler or BBU moves away from the wireless interface, the longer the delay. The farther away the scheduler from the wireless interface, the longer the delay until an acknowledgement packet can be received. On the other hand, it may be desirable to enable sufficient fiber length and a sufficient number of optical hops or routers with centralized base station architectures.

Some embodiments may use more than 8 HARQ processes, for example, 16 HARQ processes could be used. The Round-Trip Time (RTT) may be increased accordingly and may become unnecessarily large, designed to support a maximum fiber length, and may impair the experienced quality with delay-sensitive services. Other embodiments may exploit the time advance, i.e. the possibility to delay the DL timing versus the UL timing at a base station antenna port, to increase available processing delay in the base station. However, this in turn may reduce the processing delay available in the terminal. Therefore the value range of the time advance is limited and may be insufficient to support long fiber lengths.

Embodiments are based on the finding that a configurable number of HARQ processes may be supported in uplink, typically with a synchronous or with an asynchronous HARQ protocol, in order to adapt the HARQ RTT according to the needs given by the base station implementation. For example, 8 HARQ processes could be configured with a conventional base station (BBU and radio at same site), 12 HARQ processes with centralized architecture and moderate fiber length, and 16 HARQ processes with centralized architecture and long fiber length. The invention is defined by an apparatus comprising means for configuring a delay for one or more synchronous transmission cycles according to independent claim 1. The apparatus may thus comprise means for configuring and/or means for providing. For example, the means may correspond to a processing resource such as a Digital Signal Processor (DSP), Central Processing Unit (CPU), a general purpose processor, etc., having accordingly adapted software. Hence, in some embodiments the means may be implemented in software, which is executable on accordingly adapted hardware. The means for providing can further correspond to an interface between the involved components through which the apparatus is directly or indirectly, e.g. through intermediate nodes, coupled to the components to be configured.

The apparatus may hence be part of a mobile communication system. The mobile communication system may, for example, correspond to one of the mobile communication systems standardized by the 3^{rd} Generation Partnership Project (3GPP), as Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers and base station transceivers. A mobile transceiver may correspond to a smartphone, a cell phone, User Equipment (UE), a laptop, a notebook, a personal computer, a Personal Digital Assistant (PDA), a Universal Serial Bus (USB) -stick, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc.

The mobile communication system may thus be cellular. The term cell refers to a coverage area of radio services provided by a transmission point, a remote unit, a remote head, an remote radio head, a base station transceiver or a NodeB, an eNodeB, respectively. In some embodiments a cell may correspond to a sector. For example, sectors can be achieved using sector antennas, which provide a characteristic for covering an angular section around a base station transceiver. In some embodiments, a base station transceiver may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection.

In embodiments the apparatus can be implemented as means for configuring, e.g. a software being executable on accordingly adapted hardware, such as a Digital Signal Processor, a Central Processing Unit, a multi-purpose processor, etc.

In some aspects the apparatus can be operable to configure synchronous transmission cycles for transmissions of payload data packets from a mobile transceiver to a base transceiver of a mobile communication system, e.g. the UL of one of the above listed communication systems. In other embodiments the apparatus can be operable to configure transmission cycles for transmissions of payload data packets from a base station transceiver to a mobile transceiver of a mobile communication system, e.g. the DL of one of the above listed communication systems.

In embodiments transmissions, in either direction, can be organized in repetitive radio frames and each radio frame may comprise a predetermined number of sub-frames. Such radio frames or sub-frames may correspond to slots, Time Transmission Intervals (TTIs), symbols, etc. The apparatus can be further operable to configure one or more synchronous transmission cycles. In line with the above description in a synchronous transmission cycle a certain repetitive sub-frame for payload data transmission and an associated repetitive sub-frame for the acknowledgement packet with a predetermined delay relative to the sub-frame for payload data transmission, are associated to the transmission cycle. Therewith transmission cycles can be can be associated with certain sub-frames such that a mapping exists between said transmission cycles and the respective sub-frames. In such embodiments it may be possible to preclude transmission of information on a specific transmission cycle along with a payload data packet or along with an acknowledgement packet, since such information is implicit from the sub-frame the respective transmission is carried out in.

The apparatus can be operable to determine a number of transmission cycles to be configured based on a round trip time between the transmitter and the receiver. As the above example for LTE indicated, the longer the delay the more transmission cycles can be configured and multiplexed in time. In some embodiments such configuration may further determine the timing within each of the configured transmission cycles. In other words, the more transmission cycles are configured, the longer the delay between a payload transmission and an acknowledgement transmission of a particular transmission cycle may be. The round trip time can be based on the processing time between transmitting the payload data packet and receiving the acknowledgement data packet, which can be due to transit times in the system, e.g. propagation delays, signaling delay over fiber, HW delays for filtering/processing, processing delay on lower protocol layers, etc.

Furthermore, in some embodiments the apparatus can be further operable to configure the delay or a number of transmission cycles per one of or a combination of the group of a receiver, a data stream between the transmitter and the receiver, a buffer at the transmitter, a queue at the transmitter, a radio cell, a cluster of radio cells, a base station transceiver, or a group of heterogeneous cells, etc. In other words, such configuration can be per user/per stream/per queue, e.g. using configuration procedures such as Radio Resource Control (RRC) in LTE, e.g. radio link setup/reconfiguration. The configuration may be per cell, e.g. using cell broadcast transmission on a broadcast channel or within system information. In other embodiments the configuration may be per cell cluster using broadcast/system information related to a cluster of cells, where a cluster of cells may correspond to group of transmission points or cells. In further embodiments the configuration may be per cell hierarchy, e.g. small cells may use different configurations than larger cells. In such an embodiment the configuration could, for example, be indicated using a tag tagged to a cell IDentification (ID) or a hierarchy ID. The term hierarchy is meant here in the sense of a macro/pico/femto layer. In other words a group of heterogeneous cell may be addressed by the configuration. The term Heterogeneous Network (HetNet) refers to a group of cells of different sizes, e.g. a macro cell with a small cell being surrounded by the coverage of the macro cell.

That is to say, in some embodiments the apparatus is further operable to configure a number of transmission cycles for a macro base station transceiver and a small cell base station transceiver. The apparatus can be operable to configure a different number of transmission cycles at the macro base station transceiver than at the small cell base station transceiver. The apparatus can be further operable to provide handover configuration information on a transmission cycle configuration after a handover of a mobile transceiver to a base station transceiver. Additionally or alternatively the apparatus can be operable to provide information on a delay between the acknowledgement packet and a next payload data packet or information on a delay between transmitting a scheduling grant and transmitting of a payload data packet to the transmitter or the receiver. This may include the delay from sending a scheduling grant (UL or DL) to transmission of a packet. It may include the delay between transmitting and receiving ACK/NACK. In other words, the apparatus may use configuration parameters which may include the number of HARQ processes, and in case of asymmetric timing a further packet-to-ACK/NACK delay or an ACK/NACK-to-packet delay parameter.

Embodiments further provide a base station transceiver for a mobile communication system comprising the above described apparatus. The base station transceiver can be operable to communicate handover configuration information on a transmission cycle configuration with another base station transceiver. In other words, the base station transceivers may exchange or communicate handover related information among each other. For example, the handover configuration information may comprise information on a number of configured transmission cycles. In other words, a source base station transceiver or cell may communicate the number of configured transmission cycles to a target base station transceiver or cell. The base station transceiver may be operable to receive handover configuration information on a transmission cycle configuration to be applied after a handover of a mobile transceiver from a previous base station transceiver to the base station transceiver. In other words, the number of transmission cycles configured at a previous base station transceiver or cell may be different from a number of transmission cycles configured at a base station transceiver or cell a mobile transceiver may be handed over to. The previous base station transceiver or cell may have been configured with a first number of transmission cycles and the (target) base station transceiver may be configured with a second number of transmission cycles. For example, the second number is lower than the first number.

In embodiments there are different possibilities how such a base station transceiver may treat the ongoing transmission cycles of the mobile transceiver before starting new transmissions using the second number of transmission cycles. The base station transceiver can be further operable to first complete a subset of the transmission cycles started by the previous base station transceiver and for subsequently completing remaining transmission cycles of the previous base station transceiver, e.g. using the lower number of transmission cycles. The base station transceiver may be further operable to continue using the first number of transmission cycles until all transmission cycles of the previous base station transceiver have completed. In other embodiments the base station transceiver can be further operable to use a mapping rule, which assigns subsequent repetitions of the second number of transmission cycles to transmission cycles started by the previous base station transceiver. Hence, in embodiments there can be additional signaling between base station transceivers, e.g. using an interface between the base station transceivers such as the X2 interface in LTE, for communicating such mapping rules. In further embodiments the base station transceiver may be operable to use asynchronous transmission cycles to complete transmission cycles started by the previous base station transceiver.

Hence, in embodiments the base station transceiver may be operable to configure a plurality of mobile transceivers with at least two different numbers of transmission cycles and it may be operable to further configure two mobile transceivers, which are configured with different numbers of transmission cycles, to receive acknowledgement packets using different radio resources. In other words, although a synchronous transmission cycle may be used, the base station transceiver may configure certain radio resources, such as code or frequency resources, to a mobile transceiver to avoid collisions for the acknowledgement packets.

Embodiments further provide a mobile transceiver apparatus, which is operable to configure a delay for a transmission cycle. A transmission cycle corresponds to a process of transmitting a payload data packet from a transmitter and receiving an associated acknowledgement packet from a receiver at the transmitter. In line with the above, the mobile transceiver is operable to receive information on the delay between the transmitting of the payload data packet and the receiving of the associated acknowledgement packet. The mobile transceiver is operable to apply the delay when transmitting an acknowledgment packet after reception of a payload data packet or when receiving an acknowledgement packet after transmission of a payload data packet. The invention further provides a method for configuring a delay for one or more synchronous transmission cycles according to claim 11 and a computer program in claim 13 for performing the above described method. The embodiments may provide the advantage of being able to configure flexible transmission cycles in a communication system. Depending on individual delays, streams, queues, users, cell, etc. can be configured to the meet the latency given by the architecture or current configuration of the system and meet quality of service targets at the same time.

### Brief Description of the Figures

Some other features or aspects will be described using the following non-limiting embodiments of apparatuses and/or methods and/or computer programs by way of example only, and with reference to the accompanying Figures, in which
- Fig. 1: illustrates an embodiment of an apparatus for configuring;
- Fig. 2: illustrates a timing diagram for synchronous UL HARQ in an embodiment;
- Fig. 3: depicts a handover scenario in an embodiment;
- Fig. 4: shows a block diagram of an embodiment of a method for a mobile transceiver; and
- Fig. 5: shows a block diagram of an embodiment of a method for configuring.

### Description of Some Embodiments

Various embodiments will now be described in more detail with reference to the accompanying drawings. In the figures, the thicknesses of lines, layers and/or regions may be exaggerated for clarity.

Accordingly, while embodiments are capable of various modifications and alternative forms, embodiments thereof are shown by way of example in the figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description some components will be displayed in multiple figures carrying the same reference signs, but may not be described multiple times in detail. A detailed description of a component may then apply to that component for all its occurrences.

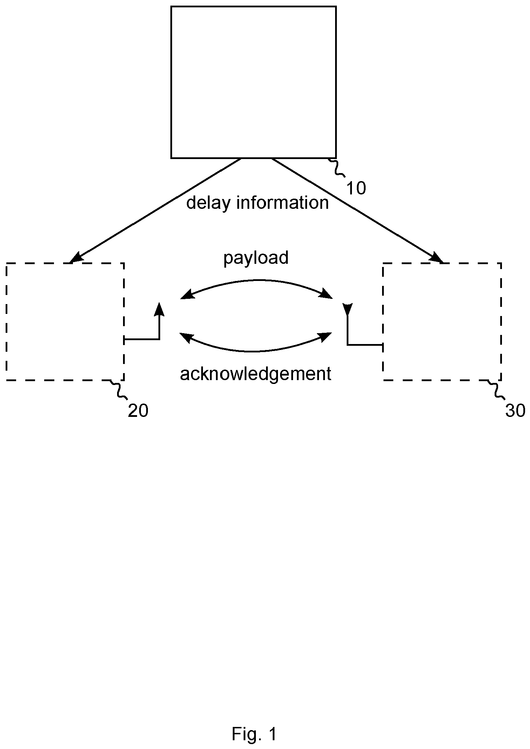

In the following optional components are shown in dashed line. Fig. 1 illustrates an embodiment of an apparatus 10 for configuring a delay for a transmission cycle. A transmission cycle corresponds to a process of transmitting a payload data packet from a transmitter 20 and receiving an associated acknowledgement packet from a receiver 30 at the transmitter 20. In the following a HARQ process can be seen as an example for a transmission cycle. The apparatus 10 is operable to provide information on the delay between the transmitting of the payload data packet and the receiving of the associated acknowledgement packet to the transmitter 20 and/or to the receiver 30.

The transmitter 20 and the receiver 30 may assume different roles in different network scenarios. The apparatus can be operable to configure transmission cycles for transmissions of payload data packets from a mobile transceiver 20 to a base station transceiver 30 of a mobile communication system. The mobile communication system is assumed to be an LTE system in the following embodiments. Moreover, in the UL the mobile transceiver 20 assumes the role of the transmitter 20 and the base station transceiver 30 assumes the role of the receiver 30. In another embodiment the apparatus 10 is operable to configure transmission cycles for transmissions of payload data packets from a base station transceiver 30 to a mobile transceiver 20 of the mobile communication system. Hence in the DL the roles of the mobile transceiver and the base station transceiver are exchanged.

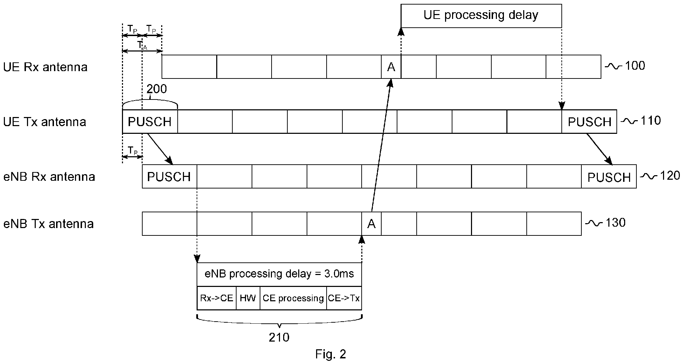

Fig. 2 illustrates timing diagram for synchronous UL HARQ in an embodiment. Fig. 2 shows four sequences 100, 110, 120, 130 of radio sub-frames. Sequence 100 at the top shows the signals at the UE Receive (Rx) antenna. Sequence 110 underneath shows the corresponding signal at the UE Transmit (Tx) antenna. The two sequences 120 and 130 show the signal sequence at the eNB Rx antenna 120 and the signal sequence at the eNB Tx antenna 130, respectively. Moreover, it is assumed that the eNB is implemented in a distributed manner, i.e. RF components are located in a RRH and baseband processing is carried out centralized at a location being distanced from the RRH at a BBU. The RRH is connected to the BBU using CPRI and optical fiber. Transmissions are organized in repetitive radio frames, wherein each radio frame comprises a predetermined number of sub-frames. In the present embodiment the apparatus 10 is further operable to configure one or more synchronous transmission cycles. For a synchronous transmission cycle a certain repetitive sub-frame for payload data transmission and an associated repetitive sub-frame for the acknowledgement packet with a predetermined delay relative to the sub-frame for payload data transmission are associated to the particular transmission cycle.

The time scale runs from left to right in Fig. 2. As the sequence 110 shows the UE transmits a payload data packet on the Physical Uplink Shared CHannel (PUSCH) during a first sub-frame, 200. As the time shift of the sequence 120 at the eNB Rx antenna shows, a propagation delay Tp is effective before the eNB can receive the PUSCH signal. In the LTE case, when aligning the UL and DL timing at eNodeB (eNB) antenna port, then 3ms processing delay are available in the eNB from the end of receiving UL PUSCH until beginning of transmission of DL ACK/NACK (A) and/or DL scheduling grant. As indicated by the accumulated delay 210 in Fig. 2.

This 3ms eNB processing delay includes the round-trip transmission latency or round-trip time, i.e. Receive (Rx) antenna to CE and CE to Transmit (Tx) antenna, eNB HardWare (HW) round-trip delays, e.g. due to Radio Frequency (RF) filters or signal processing in the RRH, and the actual signal processing delay in the CEs of the BBU. In this case, the Timing Advance T_{A} used by the UE is given as twice the propagation delay T_{P}, cf. sequence 100 in Fig. 2. To support fiber lengths of 100km on the BBU-RRH link, the effective processing time available in the CEs would be shortened to about 2ms. This may be feasible in some embodiments but it is expected to add significant costs to the BBU CEs elements. In the present embodiment the apparatus 10 is operable to determine a number of transmission cycles to be configured based on a round trip time between the transmitter and the receiver. The round trip time is based on the processing time between transmitting the payload data packet and receiving the acknowledgement data packet.

As mentioned above, the apparatus 10 can be operable to configure the delay or a number of transmission cycles per one of or a combination of the group of a receiver, a data stream between the transmitter and the receiver, a buffer at the transmitter, a queue at the transmitter, a radio cell, a cluster of radio cells, a base station transceiver, or a group of heterogeneous cells, etc. In the present embodiment it is assumed that the configuration granularity is on a user basis. Moreover, a network scenario with at least two base station transceivers is assumed, e.g. a HetNet. Hence, the apparatus 10 is further operable to configure a number of transmission cycles for a macro base station transceiver and a small cell base station transceiver. The apparatus is operable to configure a different number of transmission cycles at the macro base station transceiver than at the small cell base station transceiver and the corresponding mobile transceivers, respectively.

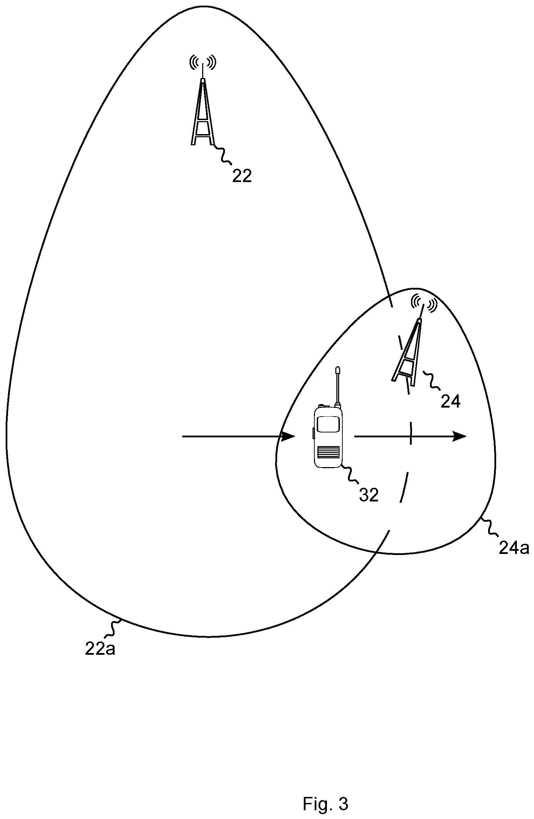

Fig. 3 depicts a handover scenario wherein a mobile transceiver 32 moves from the coverage area 22a of a base station transceiver 22 to the coverage area 24a of another base station transceiver 24. The apparatus 10 is further operable to provide handover configuration information on a transmission cycle configuration after a handover of a mobile transceiver 32 to a base station transceiver 24. The base station 24 is assumed to be the small cell base station transceiver 24, which is located within the coverage of the macro cell base station transceiver 22 and which corresponds to the previous base station transceiver 22. In the present embodiment the apparatus 10 is further operable to provide information on the delay between the acknowledgement packet and a next payload data packet or information on a delay between transmitting a scheduling grant and transmitting a payload data packet to the transmitter and the receiver, i.e. the mobile transceiver 32 and the small cell base station transceiver 24, the macro cell base station transceiver 22, respectively. This may include the delay from sending a scheduling grant (UL or DL) to transmission of a packet. It may include the delay between transmitting and receiving ACK/NACK. It is to be noted that in other embodiments the mobile transceiver 32 may hand over from the small cell base station transceiver 24 to the macro cell base station transceiver 22. The following assumption may therefore also apply the other way around, i.e. with exchanged roles of the macro cell base station transceiver 22 and the small cell base station transceiver 24.

Furthermore, it is assumed that the apparatus 10 is comprised in the macro base station transceiver 22. The base station transceivers 22, 24 are further operable to communicate handover configuration information on a transmission cycle configuration with each other. The handover configuration information comprises information on a number of configured transmission cycles. In other words, when the mobile transceiver 32 hands over from the macro cell 22 to the small cell 24, the macro base station transceiver 22 may communicate to the small cell base station transceiver 24 how many transmission cycles are configured at the mobile transceiver 32.

Moreover, the small cell base station transceiver 24 is further operable to receive handover configuration information on a transmission cycle configuration to be applied after a handover of the mobile transceiver 32 from the previous base station transceiver 22, i.e. the macro base station transceiver 22. The previous (macro) base station transceiver 22 was configured with a first number of transmission cycles and the (small cell) base station transceiver 24 is configured with a second number of transmission cycles. It is assumed that the second number is lower than the first number. In embodiments N2>=N1 is also possible, but may not be considered as critical. For this case, simply N2 processes may be applied in the new cell without causing conflicts.

In other words, in embodiments handovers from a cell 1 (e.g. macro cell 22) with N1 HARQ processes to a cell 2 (e.g. small cell 24) with N2<N1 HARQ processes may carry out some exception handling routines, when HARQ retransmissions are not interrupted or completed prior to handover, i.e. HARQ retransmissions are carried over from cell 1 to cell 2 and completed in cell 2. In some embodiments buffered soft bits can be transferred to a new cell, the soft bits may be stored in a central BBU entity, or they may be exchanged between cells via an interface such as X2. In case of a handover transmission gap, in some embodiments there may be a need to synchronize the HARQ processes between the old 22 and new cell 24, e.g. information on timing relations may be exchanged. In some embodiments such information on timing relations may be provided as part of handover configuration information to the previous base station transceiver 22, the base station transceiver 24 and the mobile transceiver 32. For example, such information can be provided using RRC signaling.

In some embodiments cell 2 may first complete the retransmissions of the first N2 HARQ processes, then the remaining retransmissions. Hence, before starting new transmissions using the second number of transmission cycles, cell2 (e.g. the small cell base station transceiver 24) is further operable to first complete a subset of the transmission cycles started by the previous (macro) base station transceiver 22 and it may subsequently complete remaining transmission cycles of the previous base station transceiver 22. In some embodiments this may cause extra delays for the remaining retransmissions.

In other embodiments, before starting new transmissions using the second number of transmission cycles, the (small cell) base station transceiver 24 is further operable to continue using the first number of transmission cycles until all transmission cycles of the previous base station transceiver 22 have completed. In other words, cell 2 may continue to use N1 HARQ processes until all retransmissions or the session are completed, then switch to N2 HARQ processes. The reconfiguration can, for example, be done by a RRC reconfiguration procedure if configured per user/mobile transceiver 32.

In yet other embodiments, before starting new transmissions using the second number of transmission cycles, the (small cell) base station transceiver 24 is further operable to use a mapping rule, which assigns subsequent repetitions of the second number of transmission cycles to transmission cycles started by the previous base station transceiver 22. Hence, cell 2 may successively reduce the number of HARQ processes by a mapping rule that is signaled to user, e.g. HARQ ID#2 is assigned or mapped to new ID #1 etc.

In further embodiments, before starting new transmissions using the second number of transmission cycles, the (small cell) base station transceiver 24 is further operable to use asynchronous transmission cycles to complete transmission cycles started by the previous base station transceiver 22. Hence, cell 2 may use an asynchronous HARQ protocol, e.g. with at least N1 HARQ processes, until all retransmissions are completed, reduces the number of active HARQ processes from N1 to N2, and then switches to synchronous HARQ with N2 HARQ processes, at least when synchronous HARQ is preferred in UL.

Hence, in embodiments the signaling to prepare a handover may therefore include exchange of number(s) of synchronous HARQ processes as part of handover configuration information between source and target cells 22, 24 or cell clusters etc. and further a mapping rule to reduce #HARQ processes in cell 2 for non-ACKed HARQ processes of cell 1.

In some embodiments the number of UL HARQ processes is configured per UE 32. Each cell may use a preferred number of HARQ processes, so as to minimize latency while enabling a centralized architecture. During handover of a UE 32 from cell 1 22 with N1 to cell 2 24 with N2<N1 preferred HARQ processes, number N1 used by the UE 32 can be signaled to cell 2 24 as handover configuration information, e.g. using the X2 interface. The content of N1 HARQ buffers may also be transferred to cell 2 24 as part of handover configuration information. For example, N1 HARQ processes are temporarily continued in cell 2 24 e.g. until the buffer is empty, then cell 2 24 reconfigures UE 32 to use N2<N1 HARQ processes.

In some embodiments, a mix of HARQ RTTs may be established within a cell. The base station transceiver 22, 24 may then be operable to configure a plurality of mobile transceivers with at least two different numbers of transmission cycles. The base station transceiver 22, 24 may be further operable to configure two mobile transceivers, which are configured with different numbers of transmission cycles, to receive acknowledgement packets using different radio resources. Given the above handover options, configuration of per-user/stream/queue HARQ RTT may be preferred in some embodiments. This concept may imply that different users in a cell may use different HARQ RTT, where typically the bulk of users uses N2 HARQ processes and a few users apply N1>N2 HARQ processes.

In LTE, the allocation of DL ACK/NACK resources on the Physical HARQ Indicator CHannel (PHICH) is determined from the lowest physical resource block of an uplink packet and a cyclic shift of the demodulation reference sequence. Both parameters are signaled with an UL grant on the Physical Downlink Control CHannel (PDCCH), further details can be found in 3GPP Technical Specification 36.213 V11.0.0 (2012-09), Evolved Universal Terrestrial Radio Access (E-UTRA), Physical layer procedures §9.1.2.

As an example in an embodiment a UE2 with N2=8 and a UE1 with N1=12 are assumed, where both UEs are configured with synchronous UL HARQ processes and associated to an eNB. It is further assumed that the delay from sending UL grant to sending UL packet and the delay from sending UL packet to receiving DL ACK/NACK are given by N2/2=4 and N1/2=6 sub-frames for UE2 and UE1, respectively. The following sequence of sub-frames is considered:
- Sub-frame #0:
   ∘ eNB sends UL grant to UE1
- Sub-frame #4:
   ∘ eNB sends UL grant to UE2
- Sub-frame #6:
   ∘ UE1 sends UL packet
- Sub-frame #8:
   ∘ UE2 sends UL packet
- Sub-frame #12:
   ∘ eNB sends DL ACK/NACKs to UE1 and UE2

In this embodiments, the eNB or base station transceiver avoids that UL grants transmitted in different sub-frames to UE1 and UE2 will cause DL ACK/NACKs being send to UE1 and UE2 using the same physical resources (time/frequency/spreading). Embodiments may use different mechanisms in order to achieve the utilization of different physical resources.

Some embodiments use eNB scheduling. The base station transceiver or eNB sends UL grants such that a DL ACK/NACK physical resource is not allocated more than once, typically the earliest UL grant transmitted reserves the respective DL ACK/NACK physical resource. And later UL grants use different Physical Resource Blocks (PRB) allocation or a different DeModulation Reference Sequence (DMRS) cyclic shift. Other embodiments may make use of different PHICH groups. For example, the LTE standard defines multiple PHICH groups, a subset of the available PHICH groups could be reserved for the UEs with N1>N2 HARQ processes. However this may cause extra DL control signaling overhead. Some embodiments may make use of a separate signaling mechanism. The separate signaling mechanism can be applied for the UEs with N1>N2 HARQ processes, e.g., the respective DL ACK/NACK physical resource could be explicitly signaled within UL grant using a separate set of bits, or a different implicit mapping rule could be applied, e.g. tagged to the control channel resource used for UL grant. Similar concepts may be used also when applying scheduling over a variable number of sub-frames, e.g. implemented by means of a duration of an assignment indicator.

Embodiments may further consider timing issues other than those of HARQ. There may be other strict timing relations used in current or next generation standards that may be hard to fulfill with centralized processing architectures, although they may be uncritical in LTE, e.g. related to paging or random access, which can also be considered as transmission cycles, and that would benefit from being configurable, similar as the sync HARQ RTT. In that perspective the acknowledgement packet may correspond to a paging or random access response packet.

Embodiments further provide a mobile transceiver apparatus, which is operable to configure a delay for a transmission cycle. A transmission cycle corresponds to a process of transmitting a payload data packet from a transmitter and receiving an associated acknowledgement packet from a receiver at the transmitter. The mobile transceiver is operable to receive information on the delay between the transmitting of the payload data packet and the receiving of the associated acknowledgement packet. The mobile transceiver is further operable to apply the delay when transmitting an acknowledgment packet after reception of a payload data packet or when receiving an acknowledgement packet after transmission of a payload data packet.

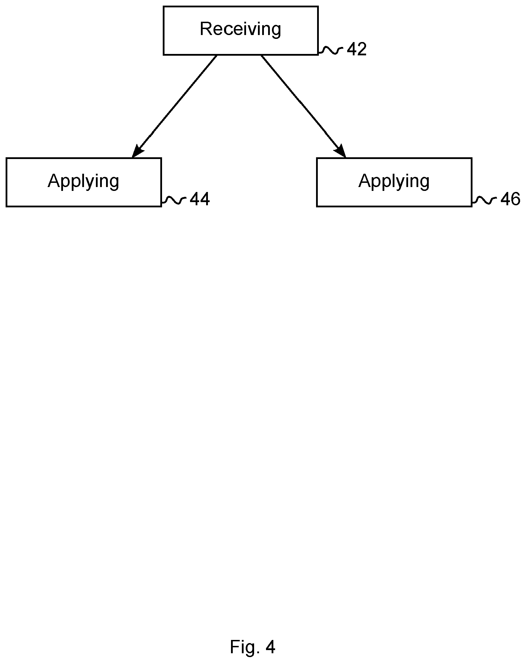

Fig. 4 shows a block diagram of an embodiment of a method for a mobile transceiver to configure a delay for a transmission cycle. The method comprises a step of receiving 42 information on the delay between the transmitting of the payload data packet and the receiving of the associated acknowledgement packet. The method further comprises a step of applying 44 the delay when transmitting an acknowledgment packet after reception of a payload data packet, or applying 46 the delay when receiving an acknowledgement packet after transmission of a payload data packet.

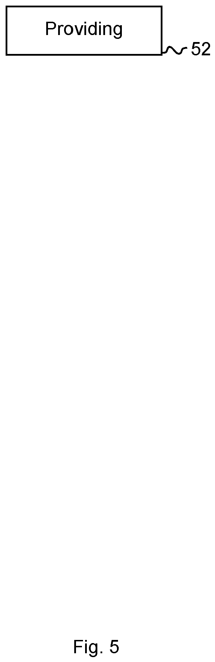

Fig. 5 shows a block diagram of an embodiment of a method for configuring a delay for a transmission cycle. The method comprises a step of providing 52 information on the delay between the transmitting of the payload data packet and the receiving of the associated acknowledgement packet to the transmitter 20 and/or to the receiver 30.

Further embodiments provide a computer program having a program code for performing one of the above methods when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for configuring", "means for providing", etc., may be provided through the use of dedicated hardware, such as "a configurator", "a provider", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) comprising means for configuring a delay for one or more synchronous transmission cycles, a transmission cycle corresponding to a process of transmitting a payload data packet from a transmitter (20) and receiving an associated acknowledgement packet from a receiver (30) at the transmitter (20), the apparatus (10) further comprising means for providing information on the configured delay to the transmitter (20) and/or to the receiver (30), the delay being between the transmitting of the payload data packet and the receiving of the associated acknowledgement packet, wherein transmissions are organized in repetitive radio frames, wherein each radio frame comprises a predetermined number of sub-frames, wherein the apparatus (10) is further operable to configure the one or more synchronous transmission cycles,
wherein for a synchronous transmission cycle a certain repetitive sub-frame for payload data transmission and an associated repetitive sub-frame, for the acknowledgement packet with the configured delay relative to the sub-frame for payload data transmission, are associated to the synchronous transmission cycle, **characterized by** the apparatus (10) being operable to configure the delay by determining and configuring a number of the transmission cycles to be multiplexed based on a round trip time between the transmitter transmitting the payload data packet and receiving the acknowledgement data packet.

2. The apparatus (10) of claim 1, being operable to configure the transmission cycles for transmissions of payload data packets from a mobile transceiver (20) to a base transceiver (30) of a mobile communication system and/or wherein the apparatus is operable to configure the transmission cycles for transmissions of payload data packets from a base station transceiver (30) to a mobile transceiver (20) of a mobile communication system.

3. The apparatus (10) of claim 1, being further operable to determine and configure the number of the transmission cycles per one of or a combination of the group of a receiver, a data stream between the transmitter and the receiver, a buffer at the transmitter, a queue at the transmitter, a radio cell, a cluster of radio cells, a base station transceiver, or a group of heterogeneous cells.

4. The apparatus (10) of claim 1, being further operable to determine and configure the number of the transmission cycles for a macro base station transceiver (22) and a small cell base station transceiver (24), wherein the apparatus is operable to configure a different number of the transmission cycles at the macro base station transceiver (22) than at the small cell base station transceiver (24).

5. The apparatus (10) of claim 1, being further operable to provide handover configuration information on the transmission cycle configuration after a handover of a mobile transceiver (32) to a base station transceiver (24) and/or being further operable to provide information on another delay between the acknowledgement packet and a next payload data packet or information on another delay between transmitting a scheduling grant and transmitting a payload data packet to the transmitter (20) or the receiver (30).

6. A base station transceiver (22, 24) of a mobile communication system comprising the apparatus (10) of claim 1.

7. The base station transceiver (22, 24) of claim 6, being further operable to communicate handover configuration information on the transmission cycle configuration with another base station transceiver (24, 22), the handover configuration information comprising information on a number of configured transmission cycles, and/or wherein the base station transceiver (22, 24) is further operable to receive handover configuration information on the transmission cycle configuration to be applied after a handover of a mobile transceiver (32) from a previous base station transceiver (24, 22) to the base station transceiver (22, 24), wherein the previous base station transceiver (24, 22) was configured with a first number of transmission cycles and the base station transceiver (22, 24) is configured with a second number of transmission cycles, wherein the second number is lower than the first number.

8. The base station transceiver (22, 24) of claim 7, being further operable to first complete a subset of the transmission cycles started by the previous base station transceiver (24, 22) and for subsequently completing remaining transmission cycles of the previous base station transceiver (24, 22),
wherein the base station transceiver (22, 24) is further operable to continue using the first number of transmission cycles until all transmission cycles of the previous base station transceiver (24, 22) have completed,
wherein the base station transceiver (22, 24) is further operable to use a mapping rule, which assigns subsequent repetitions of the second number of transmission cycles to transmission cycles started by the previous base station transceiver (24, 22), or
wherein the base station transceiver (22, 24) is further operable to use asynchronous transmission cycles to complete transmission cycles started by the previous base station transceiver (24, 22),
before starting new transmissions using the second number of transmission cycles.

9. The base station transceiver (22, 24) of claim 7, being operable to configure a plurality of mobile transceivers with at least two different numbers of transmission cycles and being operable to further configure two mobile transceivers, which are configured with different numbers of transmission cycles, to receive acknowledgement packets using different radio resources.

10. A mobile transceiver (32) apparatus being operable to configure a delay according to claim 1.

11. A method for configuring a delay for one or more synchronous transmission cycles, a transmission cycle corresponding to a process of transmitting a payload data packet from a transmitter (20) and receiving an associated acknowledgement packet from a receiver (30) at the transmitter (20), the method comprising
providing (52) information on the configured delay to the transmitter (20) and/or to the receiver (30), the delay being between the transmitting of the payload data packet and the receiving of the associated acknowledgement packet, wherein transmissions are organized in repetitive radio frames, wherein each radio frame comprises a predetermined number of sub-frames, wherein the method further comprises configuring the one or more synchronous transmission cycles, wherein for a synchronous transmission cycle a certain repetitive sub-frame for payload data transmission and an associated repetitive sub-frame, for the acknowledgement packet with the configured delay relative to the sub-frame for payload data transmission, are associated to the synchronous transmission cycle, **characterized by** the method further comprising configuring the delay by determining and configuring a number of the transmission cycles to be multiplexed based on a round trip time between the transmitter transmitting the payload data packet and receiving the acknowledgement data packet.

12. A method for a mobile transceiver (32) to configure a delay for one or more synchronous transmission cycles according to claim 11.

13. A computer program having a program code for performing one of the methods of claims 11 or 12, when the computer program is executed on a computer or processor.

## Patentansprüche

1. Vorrichtung (10), umfassend Mittel zur Konfiguration einer Verzögerung für einen oder mehrere synchrone Übertragungszyklen, wobei ein Übertragungszyklus einem Prozess der Übertragung eines Nutzdatenpakets von einem Sender (20) und des Empfangs eines zugehörigen Bestätigungspakets von einem Empfänger (30) an dem Sender (20) entspricht, wobei die Vorrichtung (10) weiterhin Mittel zur Bereitstellung von Informationen über die konfigurierte Verzögerung für den Sender (20) und/oder für den Empfänger (30) umfasst, wobei die Verzögerung zwischen der Übertragung des Nutzdatenpakets und dem Empfang des zugehörigen Bestätigungspakets ist, wobei Übertragungen in repetitiven Funkrahmen organisiert sind, wobei jeder Funkrahmen eine vorbestimmte Anzahl von Teilrahmen umfasst, wobei die Vorrichtung (10) weiterhin betriebsfähig ist, den einen oder die mehreren synchronen Übertragungszyklen zu konfigurieren,
wobei für einen synchronen Übertragungszyklus ein bestimmter repetitiver Teilrahmen für Nutzdatenübertragung und ein zugehöriger repetitiver Teilrahmen, für das Bestätigungspaket mit der konfigurierten Verzögerung in Bezug auf den Teilrahmen für Nutzdatenübertragung, zu dem synchronen Übertragungszyklus zugehörig sind,
**dadurch gekennzeichnet, dass** die Vorrichtung (10) betriebsfähig ist, die Verzögerung zu konfigurieren durch Bestimmen und Konfigurieren einer Anzahl von Übertragungszyklen, die basierend auf einer Umlaufzeit zwischen der Übertragung des Nutzdatenpakets und dem Empfang des Bestätigungsdatenpakets durch den Sender zu multiplexen sind.

2. Vorrichtung (10) nach Anspruch 1, die betriebsfähig ist, die Übertragungszyklen für Übertragungen von Nutzdatenpaketen von einem mobilen Transceiver (20) an einen Basis-Transceiver (30) eines mobilen Kommunikationssystems zu konfigurieren, und/oder wobei die Vorrichtung betriebsfähig ist, die Übertragungszyklen für Übertragungen von Nutzdatenpaketen von einem Basisstation-Transceiver (30) an einen mobilen Transceiver (20) eines mobilen Kommunikationssystems zu konfigurieren.

3. Vorrichtung (10) nach Anspruch 1, die weiterhin betriebsfähig ist, die Anzahl der Übertragungszyklen für eines oder eine Kombination aus der Gruppe eines Empfängers, eines Datenstroms zwischen dem Sender und dem Empfänger, eines Puffers an dem Sender, einer Warteschlange an dem Sender, einer Funkzelle, einer Gruppierung von Funkzellen, eines Basisstation-Transceivers oder aus einer Gruppe von heterogenen Zellen zu bestimmen und zu konfigurieren.

4. Vorrichtung (10) nach Anspruch 1, die weiterhin betriebsfähig ist, die Anzahl der Übertragungszyklen für einen Makro-Basisstation-Transceiver (22) und einen Kleinzellen-Basisstation-Transceiver (24) zu bestimmen und zu konfigurieren, wobei die Vorrichtung betriebsfähig ist, eine andere Anzahl der Übertragungszyklen an dem Makro-Basisstation-Transceiver (22) als an dem Kleinzellen-Basisstation-Transceiver (24) zu konfigurieren.

5. Vorrichtung (10) nach Anspruch 1, die weiterhin betriebsfähig ist, Übergabekonfigurationsinformationen über die Übertragungszykluskonfiguration nach einer Übergabe eines mobilen Transceivers (32) an einen Basisstation-Transceiver (24) bereitzustellen, und/oder die weiterhin betriebsfähig ist, Informationen über eine weitere Verzögerung zwischen dem Bestätigungspaket und einem nächsten Nutzdatenpaket oder Informationen über eine weitere Verzögerung zwischen der Übertragung einer Scheduling-Gewährung und der Übertragung eines Nutzdatenpakets an den Sender (20) oder den Empfänger (30) bereitzustellen.

6. Basisstation-Transceiver (22, 24) eines mobilen Kommunikationssystems, umfassend die Vorrichtung (10) nach Anspruch 1.

7. Basisstation-Transceiver (22, 24) nach Anspruch 6, der weiterhin betriebsfähig ist, Übergabekonfigurationsinformationen über die Übertragungszykluskonfiguration mit einem weiteren Basisstation-Transceiver (24, 22) mitzuteilen, wobei die Übergabekonfigurationsinformationen Informationen über eine Anzahl von konfigurierten Übertragungszyklen umfassen, und/oder wobei der Basisstation-Transceiver (22, 24) weiterhin betriebsfähig ist, Übergabekonfigurationsinformationen über die Übertragungszykluskonfiguration zu empfangen, die nach einer Übergabe eines mobilen Transceivers (32) von einem vorherigen Basisstation-Transceiver (24, 22) an den Basisstation-Transceiver (22, 24) anzuwenden ist, wobei der vorherige Basisstation-Transceiver (24, 22) mit einer ersten Anzahl von Übertragungszyklen konfiguriert wurde und der Basisstation-Transceiver (22, 24) mit einer zweiten Anzahl von Übertragungszyklen konfiguriert ist, wobei die zweite Anzahl geringer ist als die erste Anzahl.

8. Basisstation-Transceiver (22, 24) nach Anspruch 7, der weiterhin betriebsfähig ist, zuerst eine Teilgruppe der Übertragungszyklen abzuschließen, die von dem vorherigen Basisstation-Transceiver (24, 22) gestartet wurden, und anschließend verbleibende Übertragungszyklen des vorherigen Basisstation-Transceivers (24, 22) abzuschließen,
wobei der Basisstation-Transceiver (22, 24) weiterhin betriebsfähig ist, die erste Anzahl von Übertragungszyklen weiter zu benutzen, bis alle Übertragungszyklen des vorherigen Basisstation-Transceivers (24, 22) abgeschlossen sind,
wobei der Basisstation-Transceiver (22, 24) weiterhin betriebsfähig ist, eine Abbildungsregel zu benutzen, die anschließende Wiederholungen der zweiten Anzahl von Übertragungszyklen Übertragungszyklen zuweist, die von dem vorherigen Basisstation-Transceiver (24, 22) gestartet wurden, oder
wobei der Basisstation-Transceiver (22, 24) weiterhin betriebsfähig ist, asynchrone Übertragungszyklen zu benutzen, um Übertragungszyklen abzuschließen, die von dem vorherigen Basisstation-Transceiver (24, 22) gestartet wurden,
bevor neue Übertragungen unter Benutzung der zweiten Anzahl von Übertragungszyklen gestartet werden.

9. Basisstation-Transceiver (22, 24) nach Anspruch 7, der betriebsfähig ist, eine Vielzahl von mobilen Transceivern mit mindestens zwei unterschiedlichen Anzahlen von Übertragungszyklen zu konfigurieren, und der betriebsfähig ist, weiterhin zwei mobile Transceiver zu konfigurieren, die mit unterschiedlichen Anzahlen von Übertragungszyklen konfiguriert sind, um Bestätigungspakete unter Benutzung unterschiedlicher Funkressourcen zu empfangen.

10. Mobile Transceiver-Vorrichtung (32), die betriebsfähig ist, eine Verzögerung nach Anspruch 1 zu konfigurieren.

11. Verfahren zur Konfiguration einer Verzögerung für einen oder mehrere synchrone Übertragungszyklen, wobei ein Übertragungszyklus einem Prozess der Übertragung eines Nutzdatenpakets von einem Sender (20) und des Empfangs eines zugehörigen Bestätigungspakets von einem Empfänger (30) an dem Sender (20) entspricht, das Verfahren umfassend
Bereitstellen (52) von Informationen über die konfigurierte Verzögerung für den Sender (20) und/oder für den Empfänger (30), wobei die Verzögerung zwischen der Übertragung des Nutzdatenpakets und dem Empfang des zugehörigen Bestätigungspakets ist, wobei Übertragungen in repetitiven Funkrahmen organisiert sind, wobei jeder Funkrahmen eine vorbestimmte Anzahl von Teilrahmen umfasst, wobei das Verfahren weiterhin das Konfigurieren des einen oder der mehreren synchronen Übertragungszyklen umfasst, wobei für einen synchronen Übertragungszyklus ein bestimmter repetitiver Teilrahmen für Nutzdatenübertragung und ein zugehöriger repetitiver Teilrahmen, für das Bestätigungspaket mit der konfigurierten Verzögerung in Bezug auf den Teilrahmen für Nutzdatenübertragung, zu dem synchronen Übertragungszyklus zugehörig sind,
**dadurch gekennzeichnet, dass** das Verfahren weiterhin das Konfigurieren der Verzögerung durch Bestimmen und Konfigurieren einer Anzahl von Übertragungszyklen, die basierend auf einer Umlaufzeit zwischen der Übertragung des Nutzdatenpakets und dem Empfang des Bestätigungsdatenpakets durch den Sender zu multiplexen sind, umfasst.

12. Verfahren für einen mobilen Transceiver (32) zur Konfiguration einer Verzögerung für einen oder mehrere synchrone Übertragungszyklen nach Anspruch 11.

13. Computerprogramm, das einen Programmcode zum Durchführen eines der Verfahren nach Anspruch 11 oder 12 aufweist, wenn das Computerprogramm auf einem Computer oder Prozessor ausgeführt wird.

## Revendications

1. Appareil (10) comprenant des moyens pour configurer un retard pour un ou plusieurs cycles de transmission synchrones, un cycle de transmission correspondant à un processus de transmission d'un paquet de données de charge utile à partir d'un émetteur (20) et de réception d'un paquet d'accusé de réception associé à partir d'un récepteur (30) au niveau de l'émetteur (20), l'appareil (10) comprenant en outre des moyens pour fournir des informations sur le retard configuré à l'émetteur (20) et/ou au récepteur (30), le retard étant entre la transmission du paquet de données de charge utile et la réception du paquet d'accusé de réception associé, dans lequel des transmissions sont organisées dans des trames radio répétitives, chaque trame radio comprenant un nombre prédéterminé de sous-trames, l'appareil (10) permettant en outre de configurer le ou les cycles de transmission synchrones,
dans lequel pour un cycle de transmission synchrone une certaine sous-trame répétitive pour une transmission de données de charge utile et une sous-trame répétitive associée, pour le paquet d'accusé de réception avec le retard configuré par rapport à la sous-trame pour une transmission de données de charge utile, sont associées au cycle de transmission synchrone,
**caractérisé en ce que** l'appareil (10) permet de configurer le retard en déterminant et en configurant un nombre des cycles de transmission devant être multiplexés sur la base d'un temps de propagation aller-retour entre l'émetteur transmettant le paquet de données de charge utile et recevant le paquet de données d'accusé de réception.

2. Appareil (10) selon la revendication 1, permettant de configurer les cycles de transmission pour des transmissions de paquets de données de charge utile entre un émetteur/récepteur mobile (20) et un émetteur/récepteur de base (30) d'un système de communication mobile et/ou l'appareil permettant de configurer les cycles de transmission pour des transmissions de paquets de données de charge utile entre un émetteur/récepteur de station de base (30) et un émetteur/récepteur mobile (20) d'un système de communication mobile.

3. Appareil (10) selon la revendication 1, permettant en outre de déterminer et de configurer le nombre des cycles de transmission par un élément ou par une combinaison d'éléments du groupe constitué d'un récepteur, d'un flux de données entre l'émetteur et le récepteur, d'un tampon au niveau de l'émetteur, d'une file d'attente au niveau de l'émetteur, d'une cellule radio, d'un groupement de cellules radio, d'un émetteur/récepteur de station de base ou d'un groupe de cellules hétérogènes.

4. Appareil (10) selon la revendication 1, permettant en outre de déterminer et de configurer le nombre des cycles de transmission pour un émetteur/récepteur de macro station de base (22) et un émetteur/récepteur de station de base à petites cellules (24), l'appareil permettant de configurer un nombre des cycles de transmission au niveau de l'émetteur/récepteur de macro station de base (22) différent du nombre des cycles de transmission au niveau de l'émetteur/récepteur de station de base à petites cellules (24).

5. Appareil (10) selon la revendication 1, permettant en outre de fournir des informations de configuration de transfert sur la configuration de cycle de transmission après un transfert d'un émetteur/récepteur mobile (32) vers un émetteur/récepteur de station de base (24) et/ou permettant en outre de fournir des informations sur un autre retard entre le paquet d'accusé de réception et un paquet de données de charge utile suivant ou des informations sur un autre retard entre la transmission d'une autorisation de planification et la transmission d'un paquet de données de charge utile à l'émetteur (20) ou au récepteur (30).

6. Émetteur/récepteur de station de base (22, 24) d'un système de communication mobile comprenant l'appareil (10) selon la revendication 1.

7. Émetteur/récepteur de station de base (22, 24) selon la revendication 6, permettant en outre de communiquer des informations de configuration de transfert sur la configuration de cycle de transmission avec un autre émetteur/récepteur de station de base (24, 22), les informations de configuration de transfert comprenant des informations sur un nombre de cycles de transmission configurés, et/ou l'émetteur/récepteur de station de base (22, 24) permettant en outre de recevoir des informations de configuration de transfert sur la configuration de cycle de transmission devant être appliquées après un transfert d'un émetteur/récepteur mobile (32) entre un émetteur/récepteur de station de base (24, 22) précédent et l'émetteur/récepteur de station de base (22, 24), l'émetteur/récepteur de station de base (24, 22) précédent ayant été configuré avec un premier nombre de cycles de transmission et l'émetteur/récepteur de station de base (22, 24) est configuré avec un second nombre de cycles de transmission, le second nombre étant inférieur au premier nombre.

8. Émetteur/récepteur de station de base (22, 24) selon la revendication 7, permettant en outre de terminer d'abord un sous-ensemble des cycles de transmission démarrés par l'émetteur/récepteur de station de base (24, 22) précédent et de terminer ensuite les cycles de transmission restants de l'émetteur/récepteur de station de base (24, 22) précédent,
l'émetteur/récepteur de station de base (22, 24) permettant en outre de continuer à utiliser le premier nombre de cycles de transmission jusqu'à ce que tous les cycles de transmission de l'émetteur/récepteur de station de base (24, 22) précédent soient terminés,
l'émetteur/récepteur de station de base (22, 24) permettant en outre d'utiliser une règle de mappage, qui attribue des répétitions ultérieures du second nombre de cycles de transmission à des cycles de transmission démarrés par l'émetteur/récepteur de station de base (24, 22) précédent, ou
l'émetteur/récepteur de station de base (22, 24) permettant en outre d'utiliser des cycles de transmission asynchrones pour terminer des cycles de transmission démarrés par l'émetteur/récepteur de station de base (24, 22) précédent,
avant de démarrer de nouvelles transmissions en utilisant le second nombre de cycles de transmission.

9. Émetteur/récepteur de station de base (22, 24) selon la revendication 7, permettant de configurer une pluralité d'émetteurs/récepteurs mobiles avec au moins deux nombres différents de cycles de transmission et permettant de configurer en outre deux émetteurs/récepteurs mobiles, qui sont configurés avec différents nombres de cycles de transmission, pour recevoir des paquets d'accusé de réception en utilisant différentes ressources radio.

10. Appareil émetteur/récepteur mobile (32) permettant de configurer un retard selon la revendication 1.

11. Procédé pour configurer un retard pour un ou plusieurs cycles de transmission synchrones, un cycle de transmission correspondant à un processus de transmission d'un paquet de données de charge utile à partir d'un émetteur (20) et de réception d'un paquet d'accusé de réception associé à partir d'un récepteur (30) au niveau de l'émetteur (20), le procédé comprenant
la fourniture (52) d'informations sur le retard configuré à l'émetteur (20) et/ou au récepteur (30), le retard étant entre la transmission du paquet de données de charge utile et la réception du paquet d'accusé de réception associé, dans lequel des transmissions sont organisées dans des trames radio répétitives, chaque trame radio comprenant un nombre prédéterminé de sous-trames, le procédé comprenant en outre la configuration d'un ou de plusieurs cycles de transmission synchrones, dans lequel pour un cycle de transmission synchrone une certaine sous-trame répétitive pour une transmission de données de charge utile et une sous-trame répétitive associée, pour le paquet d'accusé de réception avec le retard configuré par rapport à la sous-trame pour une transmission de données de charge utile, étant associées au cycle de transmission synchrone,
**caractérisé en ce que** le procédé comprend en outre la configuration du retard en déterminant et en configurant un nombre des cycles de transmission devant être multiplexés sur la base d'un temps de propagation aller-retour entre l'émetteur transmettant le paquet de données de charge utile et recevant le paquet de données d'accusé de réception.

12. Procédé pour un émetteur/récepteur mobile (32) pour configurer un retard pour un ou plusieurs cycles de transmission synchrones selon la revendication 11.

13. Programme informatique possédant un code de programme pour exécuter un des procédés selon la revendication 11 ou 12, lorsque le programme informatique est exécuté sur un ordinateur ou un processeur.
